# EUROPÄISCHE PATENTANMELDUNG

(11) **EP 2 249 103 A2**
(43) Veröffentlichungstag der Anmeldung: **10.11.2010**
(21) Anmeldenummer: 10075163.5
(22) Anmeldetag: 22.04.2010
(51) Int. Cl.: F24J 2/54

(54) **System für die einachsige Sonnenstandsnachführung einer Mehrzal von Energieumwandlungsmodulen**

(30) Priorität: 28.04.2009 DE 202009006082 U
(71) Anmelder: Pietrzak, Arnd, 10435 Berlin (DE); Solar Integrated Technologies Gmbh, 55129 Mainz (DE)
(72) Erfinder: Pietrzak, Arnd, 10435 Berlin (DE)
(74) Vertreter: Patentanwälte Bressel und Partner

(57) **Zusammenfassung**

Die Erfindung betrifft ein System (1) für die einachsige Sonnenstandsnachführung einer Mehrzahl von Energieumwandlungsmodulen umfassend: eine Mehrzahl von Nachführeinheiten (2),
mindestens eine Koppelstange (13) und mindestens eine Antriebseinheit (14)
wobei die Nachführeinheiten (2) jeweils:
ein Traggestell (6) zum Aufnehmen mindestens eines der Energieumwandlungsmodule, und zwei zueinander beabstandet angeordnete Stützenelemente (3, 4) umfasst, zwischen denen das Traggestell (6) um eine Drehachse (7) drehbar gelagert ist,
wobei das Traggestell (6) einen Hebel (11) umfasst,
wobei mehrere der Nachführeinheiten (2) in einer Reihe relativ so zu einender angeordnet sind, dass diese quer zu ihren jeweiligen Drehachsen (7) von einander beabstandet sind, und die Hebel (11) der Traggestelle (6) der mehreren der Nachführeinheiten (2) mit der mindestens einen Koppelstange (13) verbunden sind und die mindestens eine Koppelstange (13) mit der mindestens einen Antriebseinheit (14) kraftschlüssig verbunden ist, so dass über eine Bewegung de Koppelstange (13) quer zu den Schwenkachsen der Traggestelle (6) die Traggestelle (6) der einen Reihe gemeinsam verschwenkbar sind, **dadurch gekennzeichnet, dass** die Stützenelemente (3, 4) als eine Längserstreckung (28) aufweisende Profile ausgebildet sind.

## Beschreibung

Die Erfindung betrifft ein System für einachsige Sonnenstandsnachführungen einer Mehrzahl von Energieumwandlungsmodulen, wobei das System umfasst: eine Mehrzahl von Nachführeinheiten, mindestens eine Koppelstange und mindestens eine Antriebseinheit, wobei die Nachführeinheiten jeweils ein Traggestell zum Aufnehmen mindestens eines der Energieumwandlungsmodule und zwei zueinander beabstandet angeordnete Stützenelemente umfasst, zwischen denen das Traggestell um eine Drehachse drehbar gelagert ist, wobei jedes Traggestell einen Hebel umfasst und wobei mehrere der Nachführeinheiten in einer Reihe relativ so zueinander angeordnet sind, dass diese quer zu ihren jeweiligen Drehachsen voneinander beabstandet sind, die Hebel der Traggestelle der mehreren der Nachführeinheiten mit der mindestens einen Koppelstange gelenkig verbunden sind und die mindestens eine Koppelstange mit der mindestens einen Antriebseinheit kraftschlüssig verbunden ist, so dass über eine Bewegung der Koppelstange quer zu den Schwenkachsen die Traggestelle der einen Reihe gemeinsam verschwenkbar sind.

Die in der Sonnenstrahlung enthaltene Energie nutzbar zu machen, ist seit der Antike bekannt. Die Energie der elektromagnetischen Strahlung kann beispielsweise in einem Energieumwandlungsmodul, welches auch als Sonnenkollektor bezeichnet wird, genutzt werden, um ein Fluid zu erwärmen. Das erwärmte Fluid kann direkt verwendet werden oder über einen Wärmetauscher geleitet werden, in dem die Wärme auf ein anderes Fluid übertragen wird. Das erwärmte Fluid oder das erwärmte andere Fluid kann beispielsweise zum Heizen oder zum Antreiben eines Generators verwendet werden. Andere Energieumwandlungsmodule umfassen Photovoltaikmodule, in denen die elektromagnetische Strahlung des Sonnenlichts direkt in elektrischen Strom umgewandelt wird.

Insbesondere bei einer Energieumwandlung der elektromagnetischen Strahlung des Sonnenlichts in einem Photovoltaikmodul in elektrischen Strom ist eine Effizienz des Umwandlungsprozesses von einem Auftreffwinkel der Sonnenstrahlung auf das Photovoltaikmodul abhängig. Da sich die Einstrahlungsrichtung im Tagesverlauf kontinuierlich ändert, ist es daher von Vorteil, die Energieumwandlungsmodule der sich ändernden Einstrahlungsrichtung nachzuführen.

Aus der WO 2006/020597 sind ein Trackingantriebssystem und ein Solarenergiekollektorsystem bekannt. Dort ist ein Trackingantriebssystem zum Drehantreiben eines oder mehrerer Objekte beschrieben, welches umfasst: ein zur Drehung um eine Achse angeordnetes Drehmomentelement, wobei das Drehmomentelement das eine Objekt oder die mehreren Objekte zur Drehung damit um die genannte Achse unterstützen kann; eine mit dem Drehmomentelement verbundenen Hebelarm, wobei der Hebelarm zum Drehen des Drehmomentelements bewegbar ist; ein bewegbares Antriebselement, das von einem Antriebsmechanismus angetrieben ist; und eine dynamische Kupplung, die das Antriebsglied mit dem Hebelarm koppelt, so dass der Hebelarm zur Drehung des Drehmomentelements durch das Antriebsglied antreibbar ist. Als Antriebsmechanismus ist ein lineares Stellglied vorgeschlagen. Die Drehmomentelemente, die jeweils mit einem Sonnenkollektor assoziiert werden können, sind auf einzelnen Fundamenten oder hierauf befestigten Stützträgern angebracht.

Aus der US 6,058,930 ist eine Sonnenkollektomachführanordnung bekannt, die mindestens ein entlang einer Nordsüdrichtung ausgerichtetes Schwenkrohr umfasst, das eine Anordnung von flachen, rechteckigen Sonnenkollektoren unterstützt. Mindestens eine Stütze umfasst ein Gelenkelement, in dem das Schwenkrohr geführt ist. Ein lineares Stellglied umfasst einen Körperabschnitt, der an einer Stütze befestigt ist, die auf einem gesonderten Fundament, welches getrennt von dem Fundament der mindestens einen Stütze ausgebildet ist. Das Stellglied umfasst eine Stange, die mit einem Hebelarm auf dem Schwenkrohr gekoppelt ist. Das Stellglied kann horizontal oder vertikal ausgerichtet sein. Ein horizontal ausgerichteter Antrieb kann verwendet werden, um mehrere Sonnenkollektoren anzutreiben, wobei ein Verbindungsmechanismus die Hebelarme der mehreren Sonnenkollektoren verbindet. Der Verbindungsmechanismus kann eine Reihe von starren Verbindungselementen umfassen, die gelenkig miteinander verbunden sind.

Die bekannten Systeme sind in der Lage, mehrere Energieumwandlungsmodule durch Schwenkbewegung um eine Achse einer Wanderung der Einstrahlungsrichtung des Sonnenlichts nachzuführen. Schwierig ist es jedoch, die einzelnen Sonnenkollektoren auf einfache Weise zueinander auszurichten und zu installieren.

Der Erfindung liegt somit die technische Aufgabe zugrunde, ein System eingangs genannter Art zu schaffen, welches einen einfacheren Aufbau der Energieumwandlungsanlage mit mehreren Energieumwandlungsmodulen bzw. mehreren Nachführeinheiten ermöglicht.

Nach einem Aspekt der Erfindung werden für das eingangs genannte System Stützenelemente verwendet, die als Profile ausgebildet sind, die eine Längserstreckung aufweisen. Profile zeichnen sich dadurch aus, dass sie entlang ihrer Längserstreckungsrichtung jeweils quer zu dieser eine identische Querschnittsform aufweisen. Somit ist eine höhenangepasste Anbringung von Halterungselementen, über die die Traggestelle mit den Stützenelementen verbunden sind, auf einfache Weise möglich.

Einen besonders einfachen Aufbau erreicht man für Anlagen, die im Gelände errichtet werden sollen, wenn die Stützenelemente als Rammprofile ausgebildet sind bzw. werden, die in ein Erdreich gerammt sind bzw. werden. Hierdurch wird ein besonders einfacher Anlagenaufbau auch in unebenem Terrain ermöglicht, ohne vorher aufwendige Erdarbeiten zur Ebnung des Geländes oder zum Einbringen von Fundamenten ausführen zu müssen.

Bei einer besonders bevorzugten Ausführungsform sind die Traggestelle, die auch als Modultische bezeichnet werden, jeweils an gegenüberliegenden Seiten mittels zweier Drehlager gelagert, die mit Lagersitzen von Halterungsvorrichtungen ineinander greifen, die an den Stützenelementen fixierbar sind oder fixiert sind, wobei jeweils mindestens eine der Halterungsvorrichtungen (d.h. mindestens eine Halterungsvorrichtung je Nachführeinheit) in unterschiedlichen Positionen an dem entsprechenden Stützenelement mittels mindestens eines Fixierelements lösbar fixierbar ist oder fixiert ist, wobei die mindestens eine der Halterungsvorrichtungen in einem gelösten Zustand des Fixierelements verschiebbar ist, so dass eine Höhe des Lagersitzes gegenüber einer Bezugsebene, die senkrecht zur Längserstreckung des Stützenelements orientiert ist, variierbar ist, ohne ein Lagerspiel des Ineinandergreifens der Drehlager in die Lagersitze oberhalb einer vorgegebenen Lagersitztoleranz zu verändern. Hierbei wird davon ausgegangen, dass die Stützenelemente senkrecht zu einer horizontal ausgerichteten Ebene in das Erdreich gerammt werden. Dies bedeutet, dass die Stützenelemente gegenüber dem Horizont einen Winkel von 90° aufspannen. Eine solche horizontale Ebene ist eine virtuelle Ebene und nicht mit der jeweiligen Geländeform am Aufstellungsort des Systems verknüpft.

Eine besonders bevorzugte Ausführungsform der Halterungsvorrichtung umfasst eine Halterungslasche und einen Lagersitzwinkel, wobei der Lagersitzwinkel an einer Befestigungsplatte der Halterungslasche mittels mindestens eines Verbindungselements formschlüssig und kraftschlüssig lösbar fixierbar ist, wobei in einem gelösten Zustand des Verbindungselements der Lagersitzwinkel und die Befestigungsplatte entlang einer Richtung relativ zueinander verschiebbar sind. Hierdurch wird es ermöglicht, auf einfache Weise ein Lagerspiel einzustellen, welches das Ineinandergreifen der Drehlager in die Lagersitze der Halterungsvorrichtungen bzw. Lagersitze der Lagersitzwinkel einstellt. Um die relative Verschiebbarkeit zu erreichen, ist bei einer Ausführungsform vorgesehen, dass der Lagersitzwinkel einen Lagersitzschenkel und einen Verbindungsschenkel umfasst, die einen 90°-Winkel einschließen und wobei der Verbindungsschenkel mindestens ein Langloch aufweist, dessen Längserstreckungsrichtung senkrecht zu einer Winkelkante orientiert ist, entlang derer der Lagersitzschenkel und der Verbindungsschenkel gegeneinander angewinkelt sind. Das mindestens eine Verbindungselement greift hierbei durch das mindestens eine Langloch und ist an der Befestigungsplatte oder mit dieser formschlüssig fixiert. Vorzugsweise weist der Verbindungsschenkel zwei parallel zueinander ausgerichtete Langlöcher auf, um eine lineare Führung des Lagersitzwinkels relativ zu der Halterungslasche bzw. dessen Befestigungsplatte in dem gelösten Zustand der Verbindungselemente zu erreichen.

Die Halterungslasche ist vorzugsweise so ausgebildet, dass die Befestigungsplatte im fixierten Zustand der Halterungsvorrichtung gegenüber der Längserstreckungsrichtung des Stützenelements einen Neigungswinkel aufweist, der einen vorgegebenen Sollneigungswinkel der aufnehmbaren Solarmodule (auf den Trägerelementen bzw. Modultischen) gegenüber der Längserstreckungsrichtung der Stützenelemente entspricht. Wird der Lagersitzwinkel relativ zu der Befestigungsplatte verschoben, wird somit der Lagersitz entlang der Drehachse verschoben, um die das Trägergestell (Modultisch) drehbar gelagert ist. Eine Lagerspieleinstellung ist somit getrennt von einer Höhenverstellung an der Halterungsvorrichtung möglich.

Um eine Höhenverstellung auf einfache Weise zu realisieren, ohne dass das Lagerspiel bei der Höhenverstellung oberhalb eines Toleranzbereiches variiert ist oder wird, ist bei einer Ausführungsform vorgesehen, dass die Halterungslasche zusätzlich zu der Befestigungsplatte mindestens eine Führungsplatte umfasst, die gegenüber der Befestigungsplatte abgewinkelt ist, wobei die mindestens eine Führungsplatte mindestens eine, vorzugsweise als Durchgangsöffnung ausgebildete, Führung aufweist. Die Führung, die mit einem an dem Stützenelement befestigten oder ausgebildeten und aus dessen Profiloberfläche vorspringenden Teil oder Element, beispielsweise dem mindestens einen Fixierelement, wechselwirkt, ist so ausgebildet, dass ein Versatz der Halterungslaschen entlang der Längserstreckungsrichtung des als Profilelement ausgebildeten Stützenelements zugleich einen Versatz quer zu der Längserstreckungsrichtung des Stützenelements bewirkt. Die konkrete Ausgestaltung der Führung ist so gewählt, dass der Querversatz eine Veränderung des Lagerspiels für die Lagerung des Traggestells an der Halterungsvorrichtung aufgrund des Versatzes entlang der Längserstreckung des Stützenelements kompensiert. Die Ausgestaltung der Führung, d.h. eine Führungsrichtung oder Führungskurve, entlang der die Halterungslasche beim Versetzen entlang der Längserstreckung des Stützenelements geführt wird, hängt vor allem von einer Anordnung der Führung auf der mindestens einen Führungsplatte, hierbei insbesondere einem Abstand von der Befestigungsplatte und einer Länge des Traggestells gemessen zwischen den Lagerpunkten, an denen dieses drehbar gelagert ist, ab.

Bei einer Weiterbildung ist vorgesehen, dass die Führung als Langloch ausgebildet ist. Durch dieses mindestens eine Langloch ist vorzugsweise das mindestens eine Fixierelement geführt, welches im fixierten Zustand die Führungsplatte und somit die Halterungslasche kraft- und formschlüssig mit dem Stützenelement verbindet. Besonders bevorzugt sind zwei zueinander ausgerichtete Führungen in der mindestens einen Führungsplatte vorgesehen.

Um eine hohe Stabilität der Halterung zu erreichen, ist bei einer Ausführungsform vorgesehen, dass die Halterungslasche zwei an gegenüberliegenden Seiten der Befestigungsplatte abgewinkelte Führungsplatten umfasst, die flächig zueinander parallel orientiert sind und jeweils mindestens zwei Führungen aufweisen, die bezüglich einer Projektion entlang der Oberflächennormale der Führungsplatten deckungsgleich sind oder zumindest deckungsgleiche Abschnitte umfassen. Bei dieser Ausführungsform können zwei Fixierelemente verwendet werden, die jeweils durch eine der Führungen der einen Führungsplatte, das Stützenelement und eine Führung der anderen Führungsplatte geführt sind.

Alternativ können die Führungen als kreissektorförmige Langlöcher ausgeführt sein, wobei ein Krümmungsradius der Führungen einem Sollabstand der Lagersitze entspricht, in die die Drehlager des entsprechenden Traggestells eingreifen. Bezeichnet man die Enden, an denen das Traggestell gelagert ist, als proximales Ende und als distales Ende und bezeichnet man ferner die Halterungsvorrichtung, an dem das proximale Ende drehbar gelagert ist, als proximale Halterungsvorrichtung und entsprechend die andere Halterungsvorrichtung der Nachführeinheit als distale Halterungsvorrichtung, so lässt sich bei einer Ausführungsform die Lage der Führungen an den Halterungslaschen der proximalen Halterungsvorrichtung wie folgt bestimmen. Als Mittelpunkt für den die Führungen bestimmenden Kreissektor wird der entlang der Oberflächennormale der Führungsplatte in die Ebene der Führungsplatte projizierte Mittelpunkt des Lagersitzes der distalen Halterungsvorrichtung verwendet, unter der Annahme, dass diese relativ zu der proximalen Halterungsvorrichtung so angeordnet ist, dass das Traggestell dazwischen unter der Sollneigung mit dem Solllagerspiel gelagert ist und ein in die Führung eingreifendes Element sich in einer Mittenposition des Kreissektors befindet. Ist das Langloch bzw. die Führung auf diese Weise ausgeführt, so wird im Idealfall ein Lagerspiel der Drehlager des Traggestells bei einer Höhenverstellung" der Halterungsvorrichtung vollständig unverändert gelassen. Werden hingegen gerade Langlöcher, die diese Kreissektoren approximieren, verwendet, so findet eine minimale Lagersitzvariation statt, die von einer Abweichung der Langlöcher von den Kreissektoren herrühren.

Um einen Transport zu dem Aufstellungsort des Systems zu vereinfachen, ist es vorteilhaft, die Hebel als Winkel mit zwei in einem Gelenk verbundenen Schenkeln auszubilden. Im Transportzustand können die Schenkel so zueinander positioniert werden, dass sie einen Winkel von 0° oder nahezu 0° bzw. von 180° aufweisen.

Bei einer bevorzugten Weiterbildung ist vorgesehen, dass in dem Gelenk zusätzlich zu den Schenkeln des Hebels ein Koppelstangen-Befestigungselement gelagert ist. Hierdurch kann eine gelenkige Anbindung der Koppelstange an den jeweiligen Hebel erreicht werden, ohne ein zusätzliches Gelenk zu benötigen. Das Gelenk ist vorzugsweise als Gleitlager ausgebildet.

Besonders bevorzugt umfasst das Koppelstangen-Befestigungselement ein Koppelstangen-Befestigungsblech, welches beabstandet von dem Gelenk in einer als Querschnittsebene bezeichneten Ebene senkrecht zu einer Gelenkebene, in der das Koppelstangen-Befestigungsblech um das Gelenk verschwenkt werden kann, in einem Befestigungsbereich eine an ein Querschnittsprofil der Koppelstange angepasste Form aufweist. Hierdurch wird eine kraftschlüssige Verbindung zwischen der Koppelstange und dem Koppelstangen-Befestigungsblech erleichtert, da eine Kontaktfläche des Befestigungsbereiches zu der Koppelstange vergrößert wird.

Eine besonders einfache Fixierung und Befestigung der Koppelstange an dem Koppelstangen-Befestigungsblech lässt sich mit einer Ausführungsform erreichen, bei der das Koppelstangen-Befestigungsblech an einem Ende des Befestigungsbereichs eine T-förmige Aussparung oder eine T-förmige Randform und benachbart zu einem gegenüberliegenden Ende des Befestigungsbereichs eine Öffnung zum Aufnehmen eines Befestigungselements aufweist. Eine Befestigung der Koppelstange erfolgt dann jeweils über ein Gegenblech, welches angepasst eine T-förmige Randform bzw. eine T-förmige Aussparung (jeweils entgegengesetzt zu der Form des Koppelstangen-Befestigungsblechs) aufweist und an einem gegenüberliegenden Endes eines weiteren Befestigungsbereichs ebenfalls eine Öffnung zum Aufnehmen des Befestigungselements aufweist. Das Gegenblech und das Koppelstangen-Befestigungsblech können somit über die T-förmige Aussparung und die T-förmige Randform jeweils an einem Ende des Befestigungsbereichs miteinander verhakt werden. Über eine formschlüssige Verbindung des Koppelstangen-Befestigungsblechs mit dem Gegenblech, die beispielsweise mittels einer Schraube ausgebildet wird, die durch oder in die Öffnungen des Koppelstangen-Befestigungsblechs und des Gegenblechs ein- oder durchgreift, kann die zwischen dem Koppelstangen-Befestigungsblech und dem Gegenblech geführte Koppelstange kraftschlüssig mit dem Koppelstangen-Befestigungsblech verbunden werden. Dadurch, dass die Querschnittsform des Befestigungsbereichs an einen Querschnitt der Koppelstange angepasst ist, kann die Befestigung entlang der Koppelstange nahezu an beliebiger Position entlang der Koppelstange erfolgen. Hierüber ist es wiederum möglich, über den mit dem Koppelstangen-Befestigungsblech gekoppelten Hebel eine Verschwenkung des jeweiligen Traggestells oder Modultisches individuell bei einer festgelegten Position der Koppelstange relativ zu den Verschwenkungen der übrigen Traggestelle bzw. Modultischen einzustellen. Hierbei ist jeweils nur eine lösbare Verbindung zu lösen bzw. zu fixieren.

Die mindestens eine Antriebseinheit ist vorzugsweise in eine Linearantriebseinheit, die an einem Ende gelenkig an einer Koppelstangenbefestigung, welche kraftschlüssig an der Koppelstange befestigt ist, und an einem entgegengesetzten Ende gelenkig an einer Stützenelementbefestigung befestigt, wobei die Stützenelementbefestigung und entlang der Längserstreckung des Stützenelements frei wählbar kraftschlüssig befestigbar ist und die Koppelstangenbefestigung zwei an den Querschnitt der Koppelstange angepasste Befestigungsbleche umfasst, die aneinander lösbar und entlang einer Längserstreckung der Koppelstange frei positionierbar verbindbar sind, so dass mit der Koppelstange eine kraftschlüssige Verbindung ausgebildet ist und die Koppelstange über den Linearantrieb im Wesentlichen entlang einer Längserstreckung vor und zurück bewegt werden kann, um hierüber die mittels der Hebel mit der Koppelstange gekoppelten Traggestelle jeweils um deren Drehachse zu verschwenken.

Die Stützenelemente sind vorzugsweise als Sigma-Profile ausgebildet.

Bei den Energieumwandlungsmodulen handelt es sich vorzugsweise um Photovoltaikmodule.

Weitere Vorteile der Erfindung ergeben sich für den Fachmann aus der nachfolgenden detaillierten Figurenbeschreibung. Hierbei wird eine bevorzugte Ausführungsform des Systems unter Bezugnahme auf Figuren näher erläutert. Hierbei zeigen:
- Fig. 1: eine schematische Darstellung eines Systems für eine einachsige Sonnenstandsnachführung einer Mehrzahl von Energieumwandlungsmodulen;
- Fig. 2: eine schematische Seitenansicht einer Nachführeinheit;
- Fig. 3a - 3c: schematische Ansichten eines als Modultisch bezeichneten Traggestells;
- Fig. 4a, 4b: eine Vorder- und eine Seitenansicht eines Stützenelements mit einer hieran befestigten Halterungsvorrichtung;
- Fig. 4c: eine schematische Querschnittsansicht eines Stützenelements;

- Fig. 4d: eine Abwicklung einer Halterungslasche der Halterungsvorrichtung nach Fig. 4a und 4b;
- Fig. 4e: eine Abwicklung eines Lagersitzwinkels der Halterungsvorrichtung nach Fig. 4a und 4b;
- Fig. 5a - 5c: schematische Ansichten zur Erläuterung der Halterung des Traggestells (Modultisch) an einem Stützenelement sowie zur Erläuterung einer Lagerspiel- und Höhenanpassung;
- Fig. 6a, 6b: schematische Ansichten zur Veranschaulichung eines als Winkel ausgebildeten Hebels;
- Fig. 7a - 7c: schematische Darstellung zur Veranschaulichung einer Kopplung eines Hebels nach Fig. 6a und 6b mit einer Koppelstange;
- Fig. 7d - 7e: schematische Ansichten von zwei Ausführungsformen eines Koppelstangen-Befestigungsblechs;
- Fig. 8: eine Detailzeichnung einer gelenkigen Kopplung des Hebels nach Fig. 6a und 6b mit einem Koppelstangen-Befestigungsblech;
- Fig. 9a, 9b: schematische Darstellungen eines Antriebselements sowie einer Koppelstangenbefestigung zum Befestigen des Antriebselements an der Koppelstange; und
- Fig. 10a, 10b: schematische Darstellungen eines Antriebselements und einer Stützenelementbefestigung für eine Befestigung des Antriebselements an einem Stützenelement.

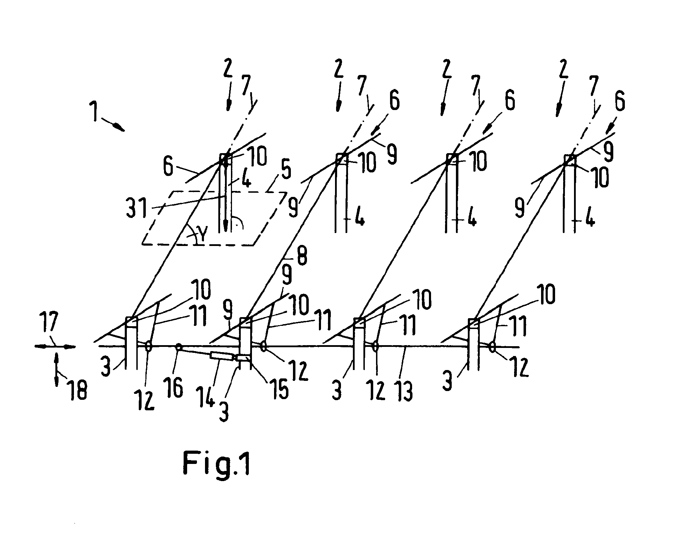

In Fig. 1 ist schematisch ein einreihig ausgebildetes System 1 für die einachsige Sonnenstandsnachführung einer Mehrzahl von Energieumwandlungsmodulen (nicht gezeigt) dargestellt. Das System 1 umfasst mehrere entlang der Reihe zueinander beabstandete Nachführeinheiten 2. Die Nachführeinheiten 2 umfassen jeweils ein kurzes Stützenelement 3 und ein langes Stützenelement 4. Diese sind als Profilelemente ausgebildet. Vorzugsweise sind die kurzen Stützenelemente 3 und langen Stützenelemente 4 als Rammprofile ausgebildet und in ein Erdreich senkrecht eingerammt. Der Begriff senkrecht ist hierbei als lotrecht zu verstehen. Dies bedeutet, dass hierüber keine Aussage über den Winkel relativ zu einer Oberfläche des Erdreichs getroffen wird, da dieses durchaus ein Gefälle gegenüber einer Horizontalen aufweisen kann. Somit weisen die Stützelemente einen rechten Winkel α gegenüber einer (virtuellen) horizontalen Ebene 5 auf.

Die Stützelemente 3, 4 sind zueinander in einer Nord-Süd-Ausrichtung angeordnet. Im Süden ist jeweils das kurze Stützenelement und im Norden das lange Stützenelement angeordnet, wobei hierbei davon ausgegangen wird, dass das System 1 auf der Nordhalbkugel aufgestellt wird.

Zwischen dem kurzen Stützenelement und dem langen Stützenelement 4 ist jeweils ein Traggestell 6, welches auch als Modultisch bezeichnet wird, um eine Drehachse 7 drehbar gelagert. Die Drehachse 7 ist somit ebenfalls entlang einer Nord-Süd-Richtung ausgerichtet. Die virtuelle Drehachse 7 weist einen Neigungswinkel γ gegenüber der (virtuellen) horizontalen Ebene 5 auf. Dieser Winkel entspricht einem Anstellwinkel der auf dem entsprechenden Traggestell 6 anordenbaren Energieumwandlungsmodule (nicht dargestellt). Das Traggestell 6, welches ein Rohr 8, das konzentrisch mit der Drehachse 7 ausgerichtet ist, und von dem Rohr 8 quer abstehende Tragarme 9 umfasst, kann ausgebildet sein, mehrere Energieumwandlungsmodule, beispielsweise Photovoltaikmodule, aufzunehmen.

Das Traggestell 6 ist über Halterungsvorrichtungen 10 mit den Stützenelementen 3, 4 verbunden. Hierbei sind die Halterungsvorrichtungen 10 mit Fixierelementen (nicht dargestellt), welche beispielsweise als Schrauben mit Muttern ausgebildet sein können, lösbar mit den Stützenelementen 3, 4 verbunden. Mindestens eine der Halterungen 10 ist so ausgebildet, dass diese im gelösten Zustand des oder der Fixierelemente relativ zu dem entsprechenden Stützenelement (3 oder 4) so verschoben werden kann, dass eine Höhe h eines Lagersitzes (nicht dargestellt), an dem das Traggestell 6 drehbar gelagert ist, bezüglich der virtuellen Ebene 5 variiert werden kann, ohne hierbei ein Lagerspiel entlang der Drehachse 7 oberhalb eines vorgegebenen Toleranzniveaus, vorzugsweise gar nicht, zu verändern.

Um einen möglichst guten Auftreffwinkel des Sonnenlichts auf die auf den Traggestellen 6 (Modultischen) angebrachten Photovoltaikmodule zu erreichen, werden die Traggestelle im Tagesverlauf um die Schwenkachse 7 verschwenkt. Um die Verschwenkung bewirken zu können, sind mit den Tragelementen als Winkel ausgebildete Hebel 11 verbunden. Diese sind über Koppelstangen-Befestigungselemente 12 jeweils mit einer Koppelstange 13 gelenkig verbunden. Die Koppelstange ist wiederum über eine Antriebseinheit 14, die vorzugsweise als Linearantrieb ausgebildet ist, verbunden. Die Antriebseinheit 14 ist zwischen einem der Stützenelemente und der Koppelstange 13 angeordnet. Hierbei ist die Antriebseinheit 14 mit dem einen der Stützenelemente 3, 4 über eine Stützenelementbefestigung 15 gelenkig mit dem Stützenelement und an einem anderen Ende über eine Koppelstangenbefestigung 16 mit der Koppelstange 13 gelenkig verbunden. Über den Linearantrieb kann die Koppelstange 13 entlang ihrer Längserstreckung hin und her bewegt werden, wie dies über einen Doppelpfeil 17 angedeutet ist. Da eine Schwenkbewegung der Hebel entlang von Kreissektorbahnen erfolgt, vollführt die Koppelstange zusätzlich eine leichte Auf- und Abbewegung senkrecht zu ihrer Längserstreckungsrichtung, wie mittels eines weiteren Doppelpfeils 18 angedeutet ist.

Die Hebel 11 und entsprechend die Koppelstange 13 sowie die Antriebseinheit 14 können auch benachbart zu den langen Stützenelementen 4 ausgebildet oder angeordnet sein.

Dargestellt ist ein einreihiges System 1. Es sind jedoch auch Systeme ausführbar, die mehrere Reihen von Nachführeinheiten umfassen, die jeweils mit einer eigenen Koppelstange gekoppelt sind. Diese können mechanisch mit der einen Koppelstange verbunden sein und somit über dieselbe Antriebseinheit angetrieben werden oder mit eigenen Antriebseinheiten gekoppelt sein.

Die Verschwenkung wird vorzugsweise programmgesteuert ausgeführt. Hierbei wird eine Zeitsteuerung bevorzugt. Andere Ausführungsformen können vorsehen, dass zusätzlich und/oder alternativ Umweltsensoren, beispielsweise strahlungsempfindliche Sensoren, Windsensoren, Regensensoren usw., ausgewertet und deren Auswertungsergebnisse bei der Steuerung berücksichtigt werden.

Bei der Montage eines solchen Systems 1 ergibt sich die Problematik, dass die einzelnen Komponenten der Nachführeinheiten justiert werden müssen. Es hat sich gezeigt, dass es vorteilhaft ist, hierfür einfache Justagemöglichkeiten vorzusehen, um beispielsweise einen vorgegebenen Neigungswinkel der einzelnen Traggestelle 6 im Hinblick auf ihren Anstellwinkel γ sowie eine Höhe 31 bezüglich der virtuellen horizontalen Ebene auf einfache Weise anpassen zu können. Darüber hinaus ist eine relative Ausrichtung der Verschwenkung um die jeweilige Drehachse 7 mit Bezug auf die weiteren Nachführeinheiten 2 notwendig, so dass diese zum selben Zeitpunkt jeweils dieselbe Verschwenkung um die Drehachse 7 bezogen auf die virtuelle horizontale Ebene 5 aufweisen. Nur so kann gewährleistet werden, dass sämtliche Energieumwandlungsmodule (beispielsweise Photovoltaikmodule) alle optimal ausgerichtet sind.

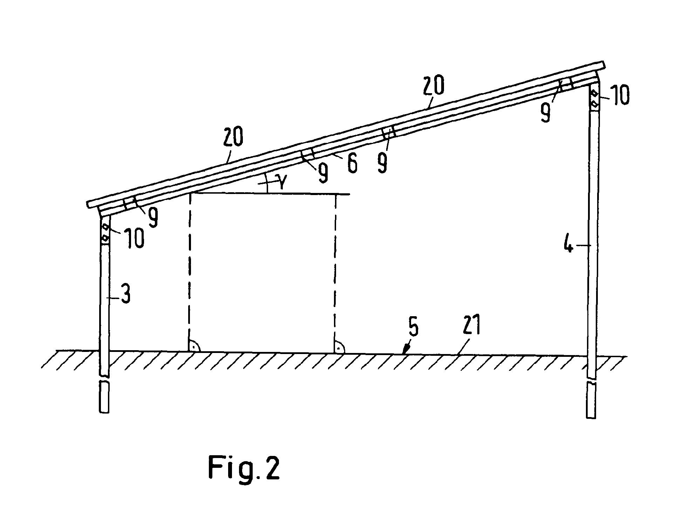

In Fig. 2 ist eine schematische Seitenansicht eines auf den Stützenelementen 3, 4 befestigten Traggestells 6 schematisch dargestellt. Durch die gesamte Beschreibung sind gleiche technische Merkmale mit identischen Bezugszeichen gekennzeichnet. Bei dieser Darstellung ist zu erkennen, dass auf dem Traggestell 6 zwei als Photovoltaikmodule 20 ausgebildete Energieumwandlungsmodule angeordnet sind. Gut zu erkennen ist ferner der Neigungswinkel γ bezüglich der (virtuellen) horizontalen Ebene 5, die bei dieser Ausführungsform mit einer Erdoberfläche 21 zusammenfällt.

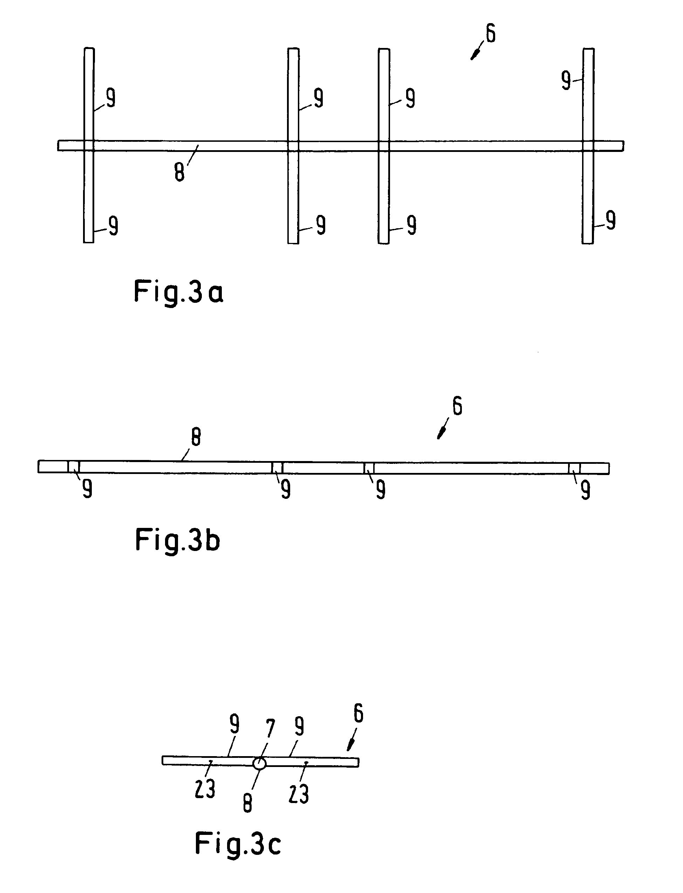

In Fig. 3a bis 3c sind unterschiedliche Ansichten eines Traggestells 6 dargestellt. Fig. 3a zeigt eine Draufsicht. Gut zu erkennen sind das zentrale Rohr 8 sowie die senkrecht hierzu verlaufenden Tragarme 9. Diese sind vorzugsweise als U-Profile ausgebildet. Dieses ist gut in Fig. 3b zu erkennen, die eine Seitenansicht darstellt. In Fig. 3c ist eine Seitenansicht parallel zu der konzentrisch durch das Rohr 8 verlaufenden Drehachse 7 dargestellt. Gut zu erkennen sind in Fig. 3c Befestigungspunkte 23, an denen der winkelartig ausgebildete Hebel 11 (vergleiche Fig. 1) an den Tragarmen 9 befestigbar ist.

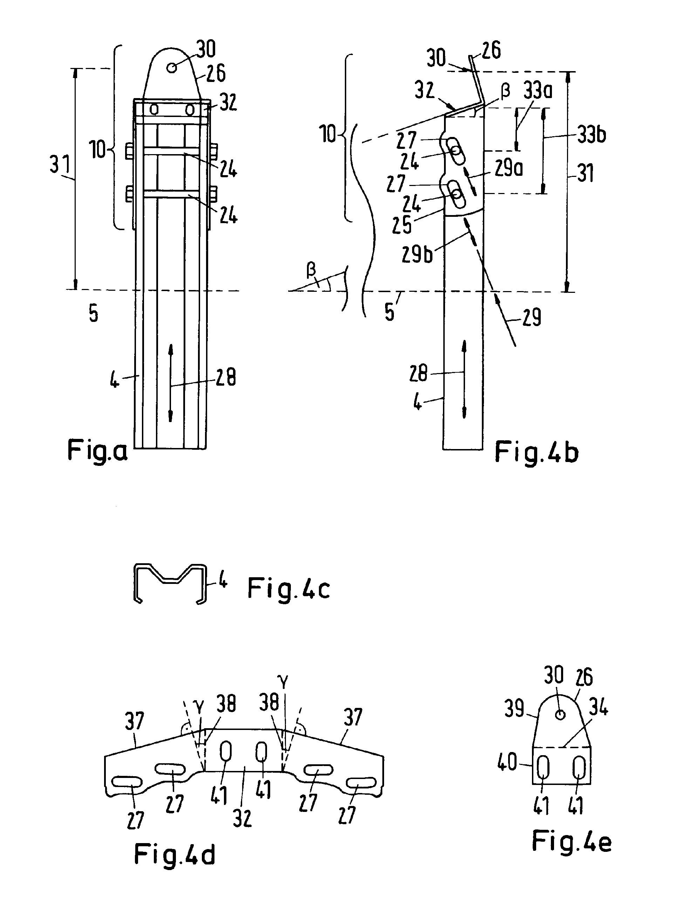

Anhand der Fig. 4a bis 4e soll erläutert werden, wie das Traggestell 6 an den Stützenelementen 3, 4 befestigt ist. Ohne Beschränkung der Allgemeinheit wird im Folgenden davon ausgegangen, dass in Fig. 4a und 4b eine Vorderansicht und eine Seitenansicht auf ein langes Stützenelement 4 gezeigt sind. An dem langen Stützenelement 4 ist eine Halterungsvorrichtung 10 über Fixierelemente 24 verbunden. Die Fixierelemente 24 umfassen vorzugsweise eine Schraube, beispielsweise eine Schraube, die an einem Ende einen Sechskantkopf und an einem gegenüberliegenden Ende ein Außengewinde aufweisen, sowie eine zugehörige Mutter, die ein angepasstes Innengewinde aufweist. Es können jedoch beliebige andere Fixierelemente verwendet werden. Die Halterungsvorrichtung 10 umfasst eine Halterungslasche 25 und einen Lagersitzwinkel 26. Diese sind lösbar aneinander befestigt. Die Halterungslasche 25 weist Führungen 27 auf, die gegenüber einer Längserstreckungsrichtung 28 des längeren Stützenelements 4 bezüglich einer Längsrichtung 29 geneigt sind. Die Neigung ist so gewählt, dass der Stützenwinkel, der einen Lagersitz 30 aufweist, bei einer Variation einer Höhe 31 der Halterungsvorrichtung 10 bzw. des Lagersitzes 30 gegenüber der virtuellen Ebene 5, die senkrecht zur Längserstreckungsrichtung 28 des längeren Stützenelements ausgerichtet ist, ein Lagerspiel eines an dem Lagersitz 30 gelagerten Tragelements 6 nicht oder nur unwesentlich verändert.

Die Halterungslasche 25 ist hierbei so ausgebildet, dass eine Befestigungsplatte 32 gegenüber der virtuellen Ebene 5 einen Neigungswinkel β aufweist, der dem Sollneigungswinkel γ des Traggestells bezüglich der virtuellen Ebene 5 entspricht. Nimmt man an, dass eine Länge des zwischen den kurzen Stützenelementen 3 und langen Stützenelementen 4 gelagerten Traggestells sehr viel größer als die Abstände 33a, 33b zwischen der Befestigungsplatte 32 und den Führungen 27 ist, so können die Längsrichtungen 29a, 29b der Führungen 27 parallel gewählt werden.

In Fig. 4c ist ein Querschnitt des Stützenelements 4 dargestellt, welches in einer bevorzugten Ausführungsform ein Sigma-Profil ist.

In Fig. 4d ist eine Abwicklung der aus einem Blech hergestellten Halterungslasche 25 schematisch dargestellt. Entlang der gestrichelt eingezeichneten Linie 38, die die Befestigungsplatte 32 begrenzen, werden Führungsplatten 37 abgewinkelt. Diese enthalten die Führungen 27. Der Sollneigungswinkel γ legt eine Form des Blechs fest, aus dem die Halterungslasche hergestellt wird.

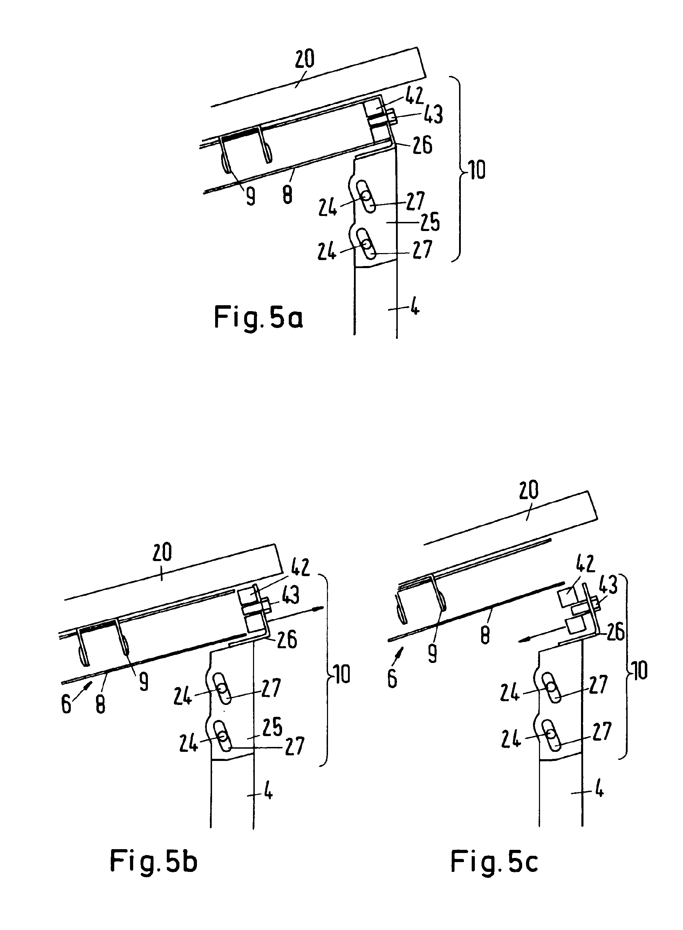

Auf der Befestigungsplatte 32 ist der Lagersitzwinkel 26 befestigt, dessen Abwicklung in Fig. 4e schematisch dargestellt ist. Dieser weist einen Lagersitzschenkel 39 und einen Verbindungsschenkel 40 auf, die entlang einer Winkelkante 34 gegeneinander um 90° angewinkelt werden.. Bei der dargestellten Ausführungsform umfassen sowohl der Verbindungsschenkel 40 als auch die Befestigungsplatte 32 der Halterungslasche 25 jeweils zwei als Langloch ausgeführte Durchgangsöffnungen 41. Hierdurch können Verbindungselemente (nicht dargestellt) geführt werden, die eine kraftschlüssige Verbindung zwischen der Befestigungsplatte und dem Verbindungsschenkel und hierüber mit dem Lagersitzwinkel 26 ausbilden. Im gelösten Zustand der Verbindungselemente, die den Lagersitzwinkel 26 mit der Halterungslasche 25 verbinden, lässt sich somit der Lagersitzwinkel 26 in der Ebene der Befestigungsplatte 32 parallel zur Schwenkachse 7 verschieben. Hierdurch ist es zum einen möglich, das Lagerspiel zwischen dem Lagersitz 30 in dem Lagersitzschenkel 39 und dem Rohr 8 bzw. einer Lagerbuchse 42 zu variieren. Hierbei ist auch die Möglichkeit geschaffen, diese Lagerbuchse auf einfache Weise auszutauschen. Dies ist exemplarisch in Fig. 5a bis 5c dargestellt. Die Lagerbuchse 42 ist mit dem Lagersitz 30 des Lagersitzwinkels 26 über einen Achsstift 43 verbunden.

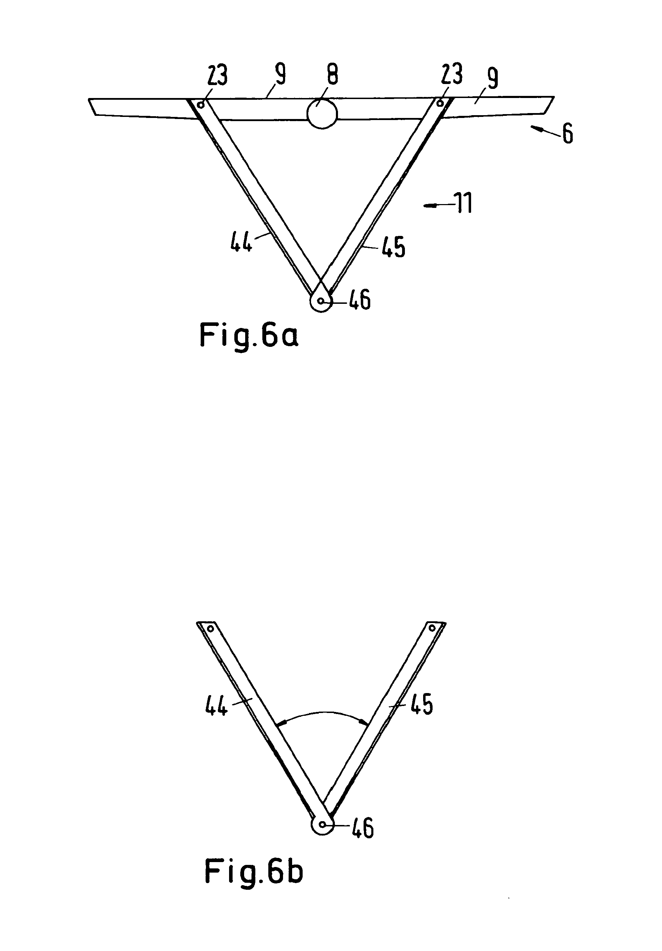

In Fig. 6a und 6b ist die Befestigung des Hebels 11 an dem Traggestell 6 bzw. den Tragarmen 9 dargestellt. Vorzugsweise ist der Hebel 11 als Winkel ausgeführt, dessen Schenkel 44, 45, gelenkig in einem Gelenk 46 miteinander verbunden sind. Die Schenkel 44, 45 sind selbst vorzugsweise als Winkelprofile ausgebildet, um eine Stabilität zu erhöhen.

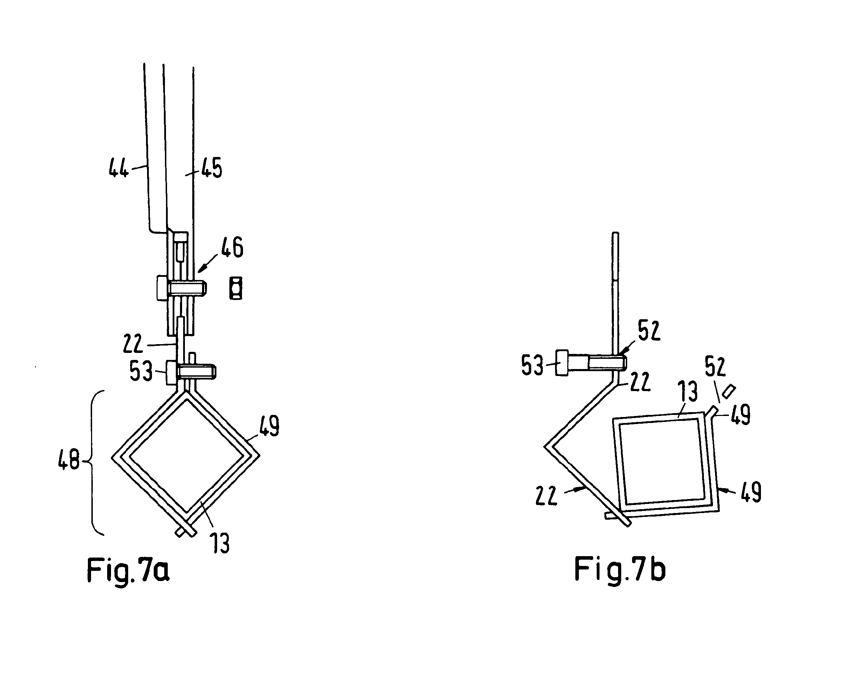

Um eine Verbindung des Hebels 11 mit der Koppelstange 13 auszubilden, ist ein Koppelstangen-Befestigungselement 12 vorgesehen. Dieses umfasst ein Koppelstangen-Befestigungsblech 22 und ein Gegenblech 49, die miteinander verbunden sind ooder verbindbar sind. Das Koppelstangen-Befestigungsblech 22 ist an einem Ende 47 in das Gelenk 46 der Schenkel 44, 45 des Hebels 11 integriert. Dies ist exemplarisch in Fig. 7a gezeigt. Ein Befestigungsbereich 48 des Koppelstangen-Befestigungsblechs 22 weist in der Zeichnungsebene, welche senkrecht auf der Ebene steht, in der das Koppelstangen-Befestigungsblech in dem Gelenk 46 verschwenkt werden kann, eine Querschnittsform auf, die an die Querschnittsform der Koppelstange angepasst ist. Im dargestellten Beispiel wird eine quadratische Querschnittsform der Koppelstange 13 angenommen. Zwischen dem Koppelstangen-Befestigungsblech und einem Gegenblech 49 wird die Koppelstange 13 geführt. Das Gegenblech 49 wird an dem Koppelstangen-Befestigungsblech 22 so befestigt, dass zwischen dem Koppelstangen-Befestigungsblech und der Koppelstange 13 eine kraftschlüssige Verbindung bezüglich der Längserstreckung der Koppelstange 13 ausgebildet wird.

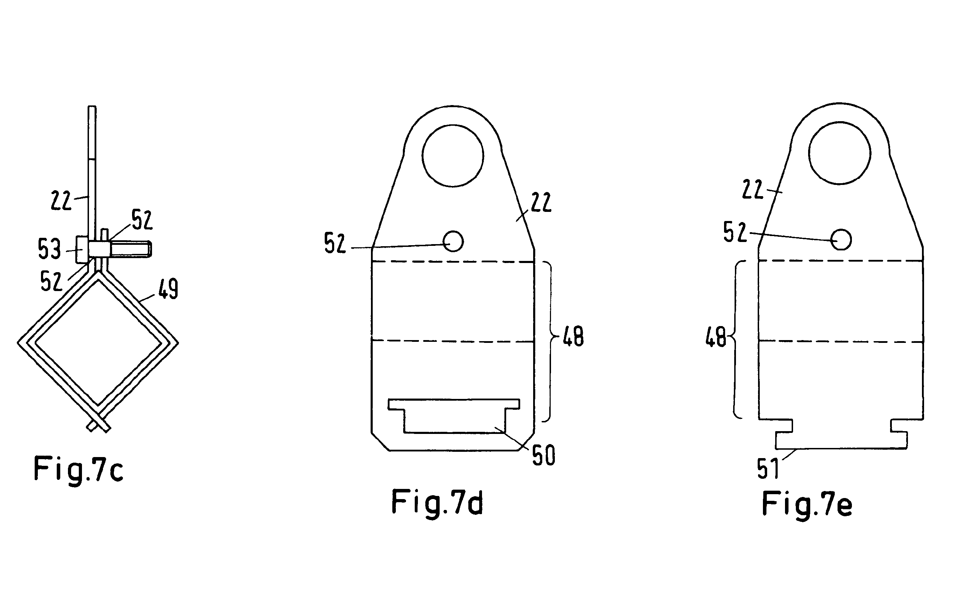

Dieser Vorgang ist schematisch in den Fig. 7b und 7c angedeutet. Eine besonders einfache Ausführungsform erhält man, indem man in das Koppelstangenblech an dem von dem Ende 47 beabstandeten Ende des Befestigungsbereichs 48 eine T-förmige Aussparung 50 ausbildet. Dies ist exemplarisch in Fig. 7d dargestellt. Alternativ kann ein Rand 51 des Koppelstangen-Befestigungsblechs 22 T-förmig ausgebildet werden. Dies ist exemplarisch in Fig. 7e dargestellt. Das Gegenblech weist jeweils die entsprechende andere Ausgestaltung auf, so dass das Koppelstangen-Befestigungsblech 22 und das Gegenblech 49 bajonettartig ineinander verhakt werden können. Sowohl das Koppelstangen-Befestigungsblech 22 als auch das Gegenblech 49 weisen jeweils Öffnungen 52 auf, durch die eine Schraube 53 geführt ist, um das Gegenblech 49 gegen das Koppelstangen-Befestigungsblech 22 zu drücken, um die kraftschlüssige Verbindung mit der Koppelstange 13 auszubilden. Es versteht sich für den Fachmann, dass bei der Ausführungsform nach Fig. 7d die T-förmige Aussparung 50 und die Öffnung 52 vertauscht werden könnten. Das Gegenblech würde dann entsprechend um 180° verdreht an dem Koppelstangen-Befestigungsblech befestigt sein.

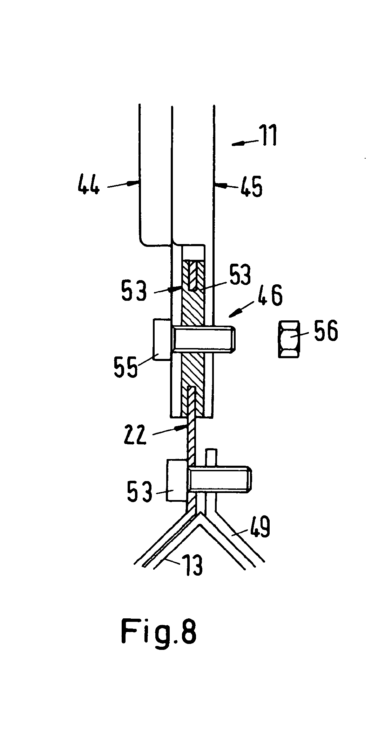

In Fig. 8 ist im Detail das Gelenk 46 dargestellt, welches zum einen ermöglicht, dass die Schenkel 44, 45 des Hebels 11 in einem Transportzustand so zueinander um das Gelenk 46 verschwenkt werden können, dass diese zueinander einen Winkel von 0° (oder nahezu 0°) oder 180° einnehmen. Ferner umfasst das Gelenk 46 Lagerbuchsen 53, die in eine Gelenköffnung 54 des Koppelstangen-Befestigungsblechs 22 (vergleiche Fig. 7d oder 7e) eingreifen. Eine Gelenkschraube 55 ist mit einer Mutter 56 verschraubt und bildet eine Gelenkachse des Gelenks 46. Diese Ausführungsform führt dazu, dass eine Schraube verwendet werden kann, um zum einen die Schenkel 44, 45 miteinander zu verbinden und zum anderen das Koppelstangen-Befestigungsblech gelenkig an dem durch die Schenkel 44, 45 gebildeten Hebel 11 zu befestigen.

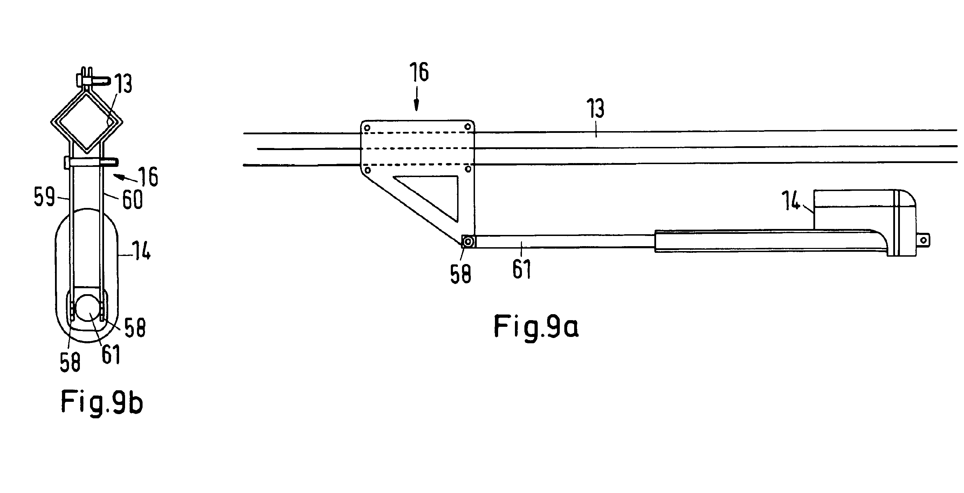

In Fig. 9a und 9b sind die Antriebseinheit 14 sowie die Koppelstangenbefestigung 16 im Querschnitt (Fig. 9a) und in Seitenansicht (Fig. 9b) schematisch dargestellt. Ähnlich dem Koppelstangen-Befestigungsblech 22 sowie dem Gegenblech 49 weist die Koppelstangenbefestigung zwei Befestigungsbleche 59, 60 auf, die in einem Befestigungsbereich 62 an den Querschnitt der Koppelstange angepasst sind. Diese Befestigungsbleche 59, 60 werden gegeneinander verschraubt, um die Koppelstangenbefestigung 16 kraftschlüssig mit der Koppelstange 13 bezüglich einer Bewegung der Koppelstange 13 entlang ihrer Längsrichtung zu bewirken. An einem von der Koppelstange beabstandeten Ende 58 sind die Befestigungsbleche 59, 60 gelenkig mit einem Kolbenstab 61 verbunden, der zwischen den Befestigungsblechen 59, 60 angeordnet ist.

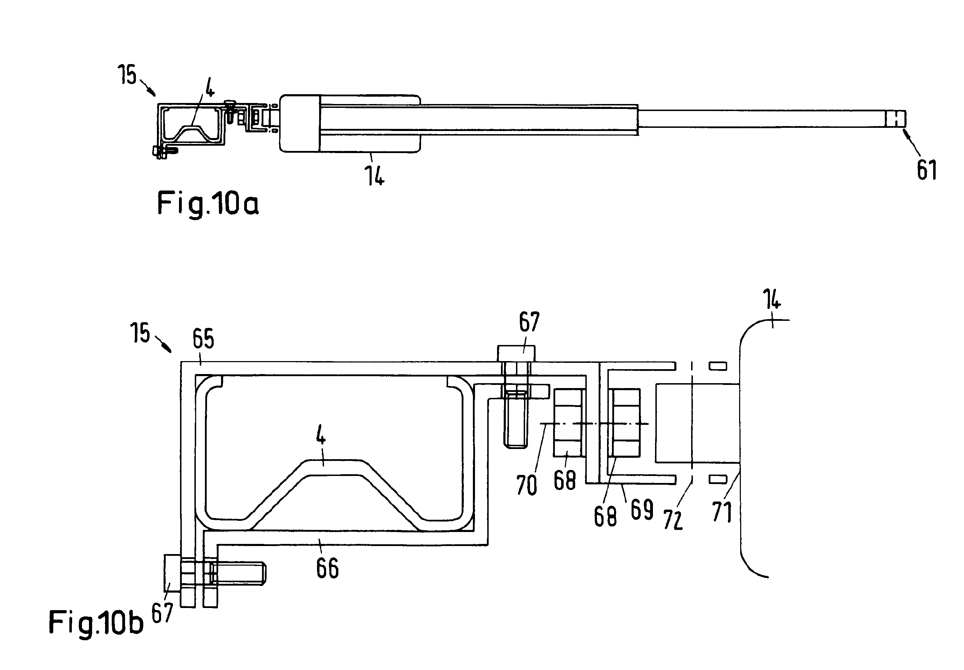

In Fig. 10a und 10b ist eine Befestigung des Antriebselements 14 an einem Stützenelement, das beispielsweise an einem langen Stützenelement 4 ist, mittels einer Stützenelementbefestigung 15 dargestellt. Dargestellt ist eine Zeichnungsebene, die quer zur Längserstreckungsrichtung des Stützenelements 4 verläuft. Die Stützenelementbefestigung 15 ist mehrteilig ausgebildet. Ein erstes Winkelelement 65 ist gegen ein zweites Winkelelement 66 mittels zwei Schrauben 67 verschraubt, so dass eine kraftschlüssige Verbindung mit dem Stützenelement 4 ausgebildet wird. Das erste Winkelelement 65 ist über eine weitere Schraubverbindung 68 mit einem weiteren U-förmigen dritten Winkelelement 69 verbunden. Um eine durch die weitere Schraubverbindung 68 ausgebildete Drehachse 70 ist das dritte U-förmige Winkelelement 69 gegenüber dem ersten Winkelelement 65 drehbar gelagert. Die Antriebseinheit 14 ist an dem von dem Kolbenstab 61 abgewandten Ende 71 um die weitere Drehachse 72 schwenkbar an dem dritten U-förmigen Winkelelement 69 gelagert. Hierdurch wird sichergestellt, dass bei einer Linearbewegung der Antriebseinheit 14, d.h. des Kolbenstabs 61, mit dem Zweck, die Koppelstange 13 entlang ihrer Längserstreckung linear zu bewegen, die zwangsweise auftretende Auf- und Abbewegung (vergleiche Doppelpfeil 18 in Fig. 1) kompensiert werden kann.

Die Stützenelementbefestigung 15 kann in variierenden Höhen bezüglich der virtuellen Ebene 5 (vergleiche Fig. 1) an dem Stützenelement 4 befestigt werden. Sowohl die Koppelstangenbefestigung 16 als auch die Befestigungen der einzelnen Koppelstangen-Befestigungsbleche 22 an der Koppelstange 13 können bezüglich einer Längserstreckung der Koppelstange 13 an unterschiedlichen Positionen erfolgen. Hierüber ist es möglich, eine Verschwenkung der einzelnen Tragelemente 6 (Modultische) relativ zueinander bei der Befestigung an der Koppelstange 13 einzustellen. Über die Wahl der Befestigungsposition der Koppelstangenbefestigung 16 kann eine Verschwenkung der einzelnen Modultische bzw. Tragelemente relativ zu einer Stellung des Linearantriebs eingestellt werden. Bei dem beschriebenen System, welches als Bausatz aus den einzelnen beschriebenen Elementen hergestellt werden kann, sind die einzelnen beim Aufbau vorzunehmenden Justagen und/oder Anpassungen bei einer Wartung jeweils unabhängig voneinander über ein Lösen bzw. Festlegen eines Fixierelements, Verbindungselements usw. bzw. gegebenenfalls zweier redundant ausgelegter Befestigungselemente, Fixierelemente oder Ähnliches zu erreichen. Hierdurch ist eine einfache Einstellung auch durch eine einzelne Person beim Aufbau und/oder der Wartung möglich.

Die Koppelstange kann aus mehreren Abschnitten bestehen, die im Bereich einer Koppelstangen-Befestigungsblech-Gegenblech-Verbindung oder einer gesonderten Verbindungsstelle zu einer starren Einheit verbunden sind oder werden.

Es ergibt sich für den Fachmann, dass lediglich eine beispielhafte Ausführungsform beschrieben ist.

### Bezugszeichenliste

- 1: System für einachsige Nachführung von Energieumwandlungsmodulen
- 2: Nachführeinheit
- 3: kurzes Stützenelement
- 4: langes Stützenelement
- 5: horizontale Ebene (virtuell)
- 6: Traggestell (Modultisch)
- 7: Drehachse
- 8: Rohr
- 9: Tragarme
- 10: Halterungsvorrichtung
- 11: Hebel
- 12: Koppelstangen-Befestigungselement
- 13: Koppelstange
- 14: Antriebseinheit
- 17: Doppelpfeil
- 18: Doppelpfeil
- 20: Photovoltaikmodul
- 21: Erdoberfläche
- 22: Koppelstangen-Befestigungsblech
- 23: Befestigungspunkte
- 24: Fixierelemente
- 25: Halterungslasche
- 26: Lagersitzwinkel
- 27: Führung
- 28: Längserstreckung der Stützenelemente
- 29, 29a, 29b: Längsrichtung (der Führung 27)
- 30: Lagersitz
- 31: Höhe
- 32: Befestigungsplatte
- 33a, 33b: Abstand Befestigungsplatte Führung
- 34: Winkelkante
- 37: Führungsplatte
- 38: gestrichelte Linie
- 39: Lagersitzschenkel
- 40: Verbindungsschenkel
- 41: Durchgangsöffnung
- 42: Lagerbuchse
- 43: Achsstift
- 44, 45: Schenkel
- 46: Gelenk
- 47: Ende (des Koppelstangen-Befestigungsblechs)
- 48: Befestigungsbereich
- 49: Gegenblech
- 50: T-förmige Aussparung
- 51: Rand (T-förmig)
- 52: Öffnungen
- 53: Lagerbuchse
- 54: Gelenköffnung
- 55: Gelenkschraube
- 56: Mutter
- 57: Befestigungsbereich
- 58: Ende
- 59, 60: Bleche
- 61: Kolbenstab
- 62: Befestigungsbereich
- 65: erstes Winkelelement
- 66: zweites Winkelelement
- 67: Schraube
- 68: weitere Schraubverbindung
- 69: drittes Winkelelement
- 70: Drehachse
- 72: weitere Drehachse

## Patentansprüche

1. System (1) für die einachsige Sonnenstandsnachführung einer Mehrzahl von Energieumwandlungsmodulen umfassend: eine Mehrzahl von Nachführeinheiten (2), mindestens eine Koppelstange (13) und mindestens eine Antriebseinheit (14) wobei die Nachführeinheiten (2) jeweils:
ein Traggestell (6) zum Aufnehmen mindestens eines der
Energieumwandlungsmodule,
und zwei zueinander beabstandet angeordnete Stützenelemente (3, 4) umfasst,
zwischen denen das Traggestell (6) um eine Drehachse (7) drehbar gelagert ist,
wobei das Traggestell (6) einen Hebel (11) umfasst,
wobei mehrere der Nachführeinheiten (2) in einer Reihe relativ so zu einender angeordnet sind, dass diese quer zu ihren jeweiligen Drehachsen (7) von einander beabstandet sind, und die Hebel (11) der Traggestelle (6) der mehreren der Nachführeinheiten (2) mit der mindestens einen Koppelstange (13) verbunden sind und die mindestens eine Koppelstange (13) mit der mindestens einen Antriebseinheit (14) kraftschlüssig verbunden ist, so dass über eine Bewegung de Koppelstange (13) quer zu den Schwenkachsen der Traggestelle (6) die Traggestelle (6) der einen Reihe gemeinsam verschwenkbar sind,
**dadurch gekennzeichnet, dass** die Stützenelemente (3, 4) als eine Längserstreckung (28) aufweisende Profile ausgebildet sind.

2. System (1) nach Anspruch 1, **dadurch gekennzeichnet, dass** die Stützenelemente (3, 4) als Rammprofile ausgebildet sind, die in ein Erdreich gerammt sind.

3. System (1) nach Anspruch 1 oder 2, **dadurch gekennzeichnet, dass** die Traggestelle (6) jeweils mittels mindestens zwei Drehlagern gelagert sind, die mit Lagersitzen (30) von Halterungsvorrichtungen (10) ineinander greifen, die an den Stützenelementen (3,4) fixierbar sind oder fixiert sind, wobei jeweils mindestens eine der Halterungsvorrichtungen (10) in unterschiedlichen Positionen an dem entsprechenden Stützenelementen (3, 4) mittels mindestens eines Fixierelements (24) lösbar fixierbar ist, wobei die mindestens eine der Halterungsvorrichtungen (10) in einem gelösten Zustand des Fixierelements (24) verschiebbar ist, so dass eine Höhe des Lagersitzes gegenüber einer horizontalen Ebene (5) variierbar ist, ohne ein Lagerspiel des Ineinandergreifens der Drehlager in die Lagersitze (30) oberhalb einer vorgegebenen Lagersitztoleranz zu verändern.

4. System (1) nach einem der vorangehenden Ansprüche, **dadurch gekennzeichnet, dass** die Halterungsvorrichtung (10) eine Halterungslasche (25) und einen Lagersitzwinkel (26) umfasst und der Lagersitzwinkel (26) auf einer Befestigungsplatte (32) der Halterungslasche (25) mittels mindestens eines Verbindungselements formschlüssig und kraftschlüssig lösbar fixierbar ist oder lösbar fixiert ist, wobei in einem gelösten Zustand des Verbindungselements der Lagersitzwinkel (26) und die Befestigungsplatte (32) entlang einer Richtung relativ zueinander verschiebbar sind.

5. System (1) nach einem der vorangehenden Ansprüche, **dadurch gekennzeichnet, dass**, der Lagersitzwinkel (26) einen Lagersitzschenkel (39) und einen Verbindungsschenkel (40) umfasst, die einen 90°-Winkel einschließen und wobei der Lagersitzschenkel (39) mindesten ein Langloch aufwiest, dessen Längserstreckungsrichtung senkrecht zur einer Winkelkante (34) ist, entlang derer der Lagersitzschenkel (39) und der Verbindungsschenkel (40) gegeneinander angewinkelt sind.

6. System (1) nach einem der vorangehenden Ansprüche, **dadurch gekennzeichnet, dass** die Halterungslasche (25) so ausgebildet ist, dass die Befestigungsplatte (32) im fixierten Zustand der Halterungsvorrichtung (10) gegenüber der Längserstreckungsrichtung der Stützenelemente (3, 4) einen Neigungswinkel aufweist, der einem vorgegebenen Sollneigungswinkel (y) der aufnehmbaren Solarmodule gegenüber der Längserstreckungsrichtung (28) der Stützenelemente (3, 4) entspricht.

7. System (1) nach einem der vorangehenden Ansprüche, **dadurch gekennzeichnet, dass** die Halterungslasche (25) zusätzlich zu der Befestigungsplatte (32) mindestens eine Führungsplatte (37) umfasst, die gegenüber der Befestigungsplatte (32) abgewinkelt ist, wobei die mindestens eine Führungsplatte (37) mindestens ein als Durchgangsöffnung ausgebildete Führung aufweist.

8. System (1) nach einem der vorangehenden Ansprüche, **dadurch gekennzeichnet, dass** die Führung als Langloch ausgebildet ist.

9. System (1) nach einem der vorangehenden Ansprüche, **dadurch gekennzeichnet, dass** die Halterungslasche (25) zwei an einander gegenüberliegenden Seiten der Befestigungsplatte (32) abgewinkelte Führungsplatten (37) umfasst, die flächig zueinander parallel orientiert sind und jeweils mindestens zwei Führungen aufweisen, die bezüglich einer Projektion entlang der Oberflächennormale der Führungsplatten (37) deckungsgleich sind oder zumindest deckungsgleiche abschnitte umfassen.

10. System (1) nach einem der vorangehenden Ansprüche, **dadurch gekennzeichnet, dass** der oder die Führungen als kreissektorförmiges Langloch ausgeführt sind, wobei ein Krümmungsradius der Führungen einem Sollabstand der Lagersitze (30) entspricht, in die die Drehlager eines Traggestells (6) eingreifen.

11. System (1) nach einem der vorangehenden Ansprüche, **dadurch gekennzeichnet, dass** die Hebel (11) als Winkel mit zwei in einem Gelenk (46) verbundenen Schenkeln (44, 45) ausgebildet sind.

12. System (1) nach einem der vorangehenden Ansprüche, **dadurch gekennzeichnet, dass** in dem Gelenk (46) zusätzlich zu den Schenkeln (44, 45) des Hebels (11) ein Koppelstangen-Befestigungselement (12) gelenkig gelagert ist.

13. System (1) nach einem der vorangehenden Ansprüche, **dadurch gekennzeichnet, dass** das Koppelstangen-Befestigungselement (12) ein Koppelstangen-Befestigungsblech (22) umfasst, das in dem Gelenk (46) gelagert ist und beabstandet von dem Gelenk (46) in einer als Querschnittsebene bezeichneten Ebene senkrecht zu einer Gelenkebene, in der das Koppelstangen-Befestigungsblech (22) um das Gelenk (46) verschwenkt werden kann, in einem Befestigungsbereich (48) eine an ein Querschnittsprofil der Koppelstange (13) angepasste Form aufweist.

14. System (1) nach einem der vorangehenden Ansprüche, **dadurch gekennzeichnet, dass** das Koppelstangen-Befestigungsblech (22) an einem Ende des Befestigungsbereich (48) eine T-förmige Aussparung (51) oder eine T-förmige Randform und benachbart zu einem gegenüberliegenden Ende des Befestigungsbereichs (48) eine Öffnung (52) zum Aufnehmen eines Befestigungselements aufweist.

15. System (1) nach einem der vorangehenden Ansprüche, **dadurch gekennzeichnet, dass** die Öffnung (52) zum Aufnehmen des Befestigungselements ein Innengewinde aufweist oder als Durchgangsöffnung ausgebildet ist.

16. System (1) nach einem der vorangehenden Ansprüche, **dadurch gekennzeichnet, dass** die mindestens eine Antriebseinheit (14) eine Linearantriebeinheit ist, die an einem Ende gelenkig an einer Koppelstangenbefestigung (16) und an einem entgegengesetzten Ende gelenkig an einer Stützelementbefestigung (15) befestigt ist, wobei die Stützelementbefestigung (15) entlang der Längserstreckung (28) des Stützenelements (3, 4) freiwählbar kraftschlüssig befestigbar ist und die Koppelstangenbefestigung zwei an den Querschnitt der Koppelstange (13) angepasste Befestigungsbleche (59, 60) umfasst, die aneinander lösbar und entlang einer Längserstreckung der Koppelstange (13) frei positionierbar verbindbar sind, so dass mit der Koppelstange (13) eine kraftschlüssige Verbindung ausgebildet ist und die Koppelstange (13) über den Linearantrieb im Wesentlichen entlang ihrer Längserstreckungsrichtung vor und zurückbewegt werden kann, um hierüber die mittels der Hebel (11) mit der Koppelstange (13) gekoppelten Traggestelle (6) jeweils um deren Drehachse (7) zu verschwenken.

17. System (1) nach einem der vorangehenden Ansprüche, **dadurch gekennzeichnet, dass** die Stützenelemente (3, 4) Sigma-Profile sind.

18. System (1) nach einem der vorangehenden Ansprüche, **dadurch gekennzeichnet, dass** die Energieumwandlungsmodule Photovoltaikmodule (20) sind.
